# EUROPEAN PATENT APPLICATION

(11) **EP 0 525 253 A1**
(43) Date of publication of application: **03.02.1993**
(21) Application number: 91201979.1
(22) Date of filing: 30.07.1991
(51) Int. Cl.: B60B 5/02, B60B 3/08

(54) **Bicycle wheel**

(71) Applicant: Tsai, Ko-Jan Carlos, Taichung Hsien (TW)
(72) Inventor: Tsai, Ko-Jan Carlos, Taichung Hsien (TW)
(74) Representative: Hoijtink, Reinoud

(57) **Abstract**

A bicycle wheel including a rim (10), a pair of side members (20) made of composite materials and each having an outer peripheral edge fixed to the rim (10), a sleeve (41) fixed in a center of each of the side members (20) and including an inner thread (43), and a hub (45) including two cup seats (46) formed on the end portions, each of the cup seats (46) having an outer thread (44) for engagement with the inner threads (43) of the sleeves (41) so that the bicycle wheel has a hollow interior.

## Description

The invention relates to a bicycle wheel which incorporates composite materials.

For indoor contest, a disc wheel was developed and used in Olympic Games of Los Angeles in 1984. The disc wheel has two side surfaces which are parallel with each other. The inner configuration of the disc wheel is honey comb configuration and includes foamable material embedded within the honey comb configuration such that the disc wheel has a substantially solid inner construction and has a heavy weight.

The objective of the invention is to provide a disc type bicycle wheel which has a hollow structure so that the bicycle wheel has a light weight.

FIG. 1 is an exploded view of a bicycle wheel;
FIG. 2 is a perspective view of one side member;
FIG. 3 is a cross sectional view of the wheel;
FIG. 4 is a perspective view of the wheel, in which half of the wheel is cut off;
FIG. 5 is an exploded view of the hub portion; and
FIGS. 6 and 7 are enlarged cross sectional views of the hub portion.

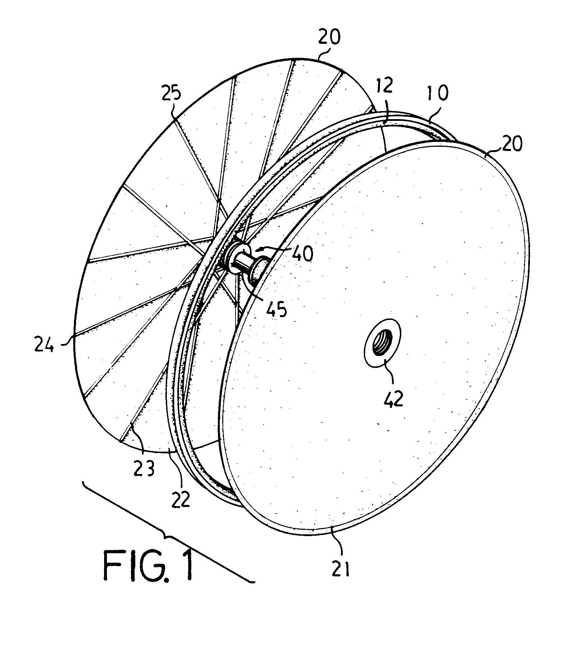

Referring to FIGS. 1, 2 and 3, a bicycle wheel comprises a rim 10 and two side members 20 fixed together, and a hub portion 40 coupled between the center portions of the side members 20. The rim 10 has an annular recess 12 formed in each side surface thereof for receiving the outer peripheral edges of the side members 20. The rim 10 and the side members 20 are made of composite materials so that the rim 10 and the outer peripheral edges of the side members 20 can be fixed together by such as hot-pressing method. The rim 10 and the outer peripheral edges of the side members 20 can also be fixed together by such as adhesive materials.

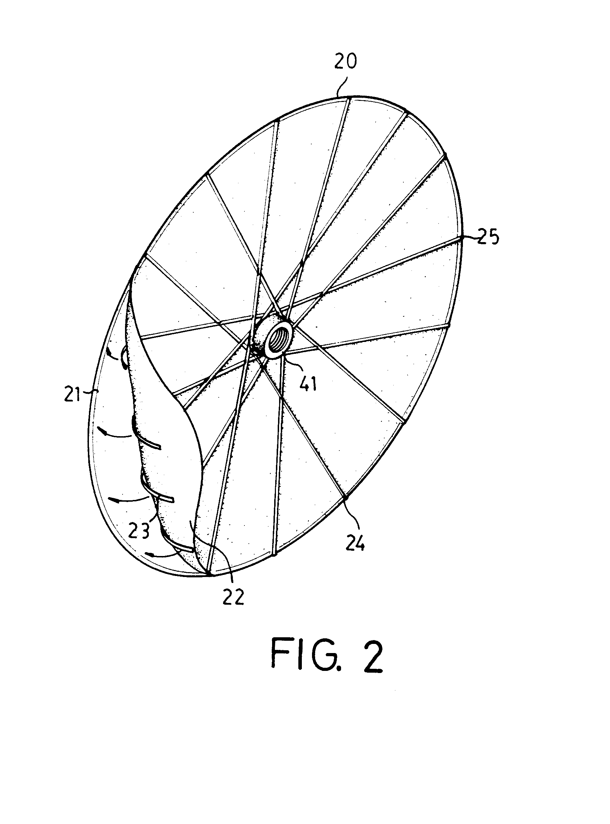

The rim 10, if made of composite materials, can have a hollow structure with foamable materials embedded therein. Alternatively, the rim 10 can be made of aluminum materials or the like. As shown in FIG. 2, each of the side members 20 includes two circular sheet layers 21, 22 of composite materials including an outer layer 21 and an inner layer 22, and a plurality strands 23 of fibers disposed between the sheet layers 21, 22 and formed integral with the sheet layers 21, 22 by such as hot-pressing processes, whereby, the sheet layers 21, 22 can be reinforced by the strands 23 of fibers and the strands 23 of fibers act as spokes of the bicycle wheel. Each of the strands 23 of fibers extends from the outer peripheral edge portion of the sheet layers 21, 22, then extends around the hub portion 40, and then extends to the outer peripheral edge portion of the sheet layers 21, 22 again. As shown in FIG. 2, one of the strands 23 of fibers extends from point 24 to point 25. The strands 23 of fibers are bulged as seen from the respective inner layer 22 and are arranged such that the outer layers 21 are flat and smooth.

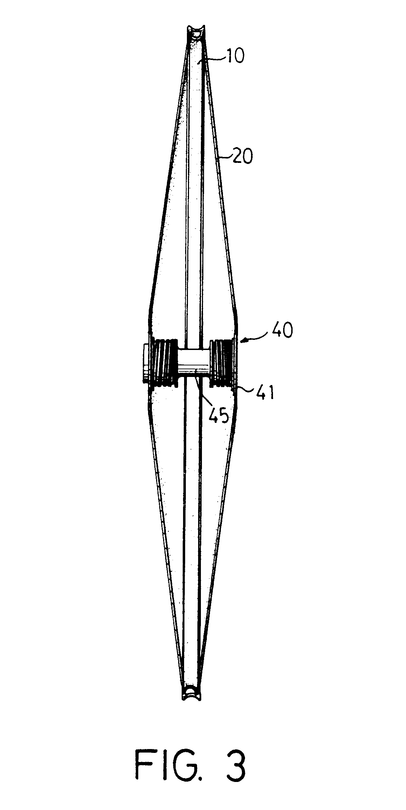

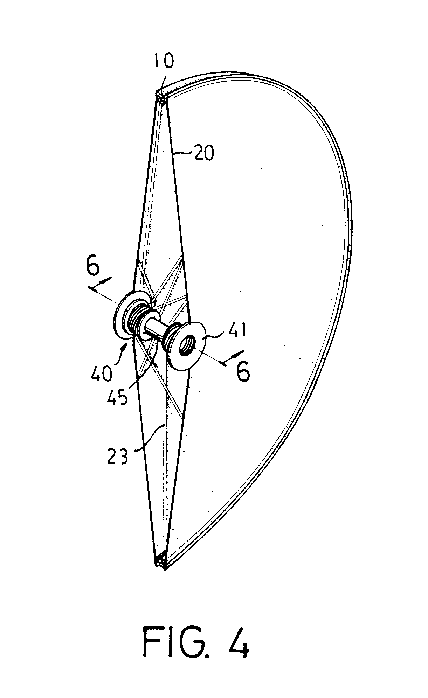

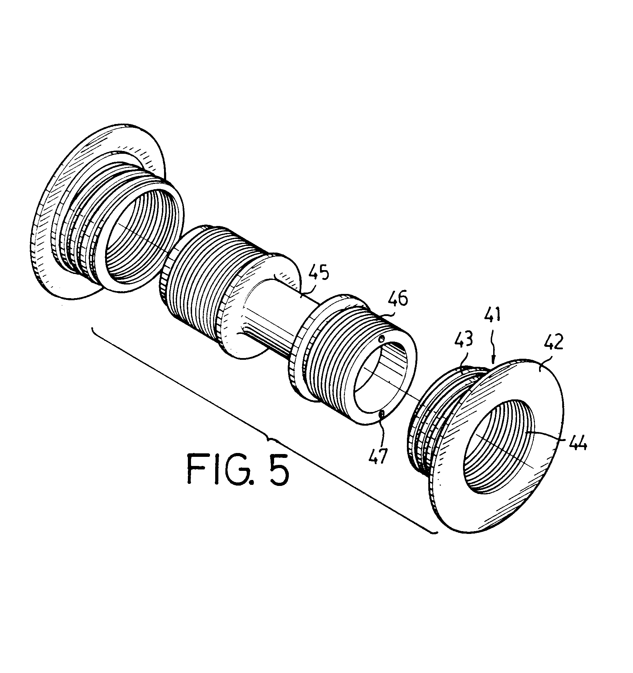

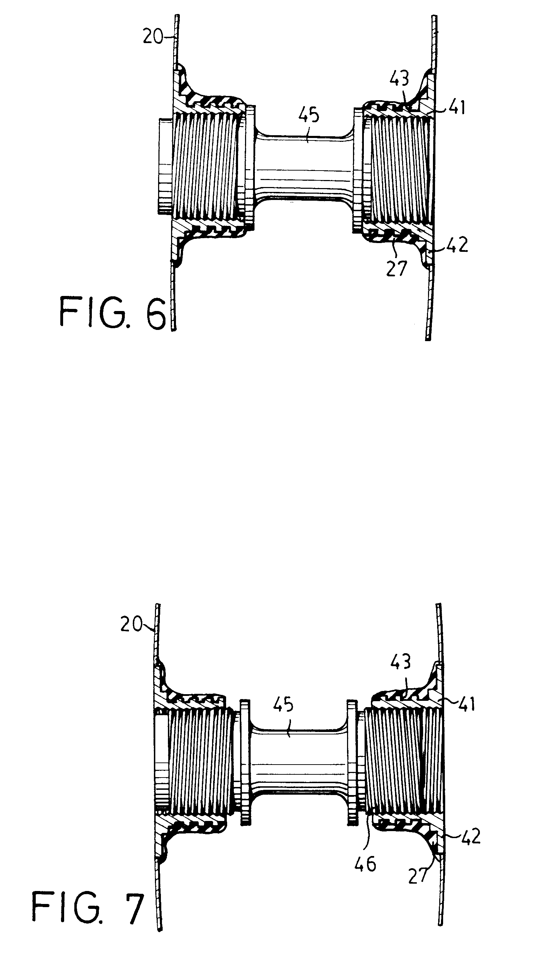

In FIGS. 3, 4, 5, 6, a sleeve 41 is fixed in the center of each of the sheet layers 21, 22 and includes an inner thread 43 and an outer thread 44 and an annular flange 42 integrally formed on one end. As shown in FIG. 6, a number layers of composite materials 27 are wound around each of the sleeves 41 and are engaged within the outer thread 43 of the sleeve 41 and are formed integral with the sheet layers 21, 22 by hot-pressing processes such that the side member 20 and the sleeve 41 can be stably fixed together.

The hub portion 40 includes a hub 45 having a pair of bearing cup seats 46 formed on the end portions. Each of the bearing cup seats 46 has an outer thread for engagement with the inner thread of the sleeve 41. A pair of holes 47 are formed in one end of the hub 45 such that the hub 45 can be rotated. The directions of the outer threads of the cup seats 46 and the inner threads of the sleeves 41 are arranged such that both of the sleeves 41 simultaneously move inward or move outward relative to the hub 45 when the hub 45 is rotated, for example, the sleeves 41 may simultaneously move outward relative to the hub 45 so that the side members 20 can be tensioned.

Accordingly, the bicycle wheel has a hollow structure such that the wheel has a light weight.

## Claims

1. A bicycle wheel comprising a rim (10); a pair of side members (20) made of composite materials and each having an outer peripheral edge fixed to said rim (10); a sleeve (41) fixed in a center of each of said side members (20) and including an inner thread (43) formed therein; and a hub (45) including two end portions each having a cup seat (46) formed thereon, each of said cup seats (46) having an outer thread (44) formed thereon for engagement with said inner threads (43) of said sleeves (41).

2. A bicycle wheel of claim 1, wherein each of said side members (20) includes two sheet layers (21,22) of composite materials, and a plurality strands (23) of fibers disposed between said sheet layers (21,22).

3. A bicycle wheel of claim 2, wherein each of said strands of fibers extends from said outer peripheral edge of said side member (20), around said hub (45), and then extends toward said outer peripheral edge of said side member (20) again.

4. A bicycle wheel of claim 3, wherein said sheet layers (21,22) of each of said side members (20) include an inner layer (22) and an outer layer (21), said strands (23) of fibers are bulged from said inner layer (22) and are arranged such that said outer layer (21) is flat and smooth.

5. A bicycle wheel of claim 1, wherein said inner threads (43) of said sleeves (41) and said outer threads (44) of said cup seats (46) are arranged such that said sleeves (41) simultaneously move outward relative to said hub (45) and simultaneously move inward relative to said hub (45) when said hub (45) is rotated.

6. A bicycle wheel of claim 5, wherein a pair of holes (47) are formed in one end of said hub (45) such that said hub (45) can be rotated.

7. A bicycle wheel of claim 1, wherein said rim (10) includes two side surfaces each having an annular recess (12) formed therein, said outer peripheral edge of each of said side members (20) is engaged in the respective annular recess (12) of said rim (10) so that said side members (20) and said rim (10) can be stably coupled together.
